(19) Europäisches Patentamt

European Patent Office

Office européen des brevets

(11) **EP 1 617 058 A2**

(12) **EUROPÄISCHE PATENTANMELDUNG**

(43) Veröffentlichungstag:
**18.01.2006 Patentblatt 2006/03**

(51) Int Cl.:
*F02D 41/02* (2006.01)       *F02D 41/14* (2006.01)

(21) Anmeldenummer: 05014809.7

(22) Anmeldetag: **08.07.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **15.07.2004  DE 102004034085**

(71) Anmelder: **LuK Lamellen und Kupplungsbau Beteiligungs KG**
**77815 Bühl (DE)**

(72) Erfinder:
• **Preisner, Marian**
  **77815 Bühl (DE)**
• **Benz, Jürgen**
  **77704 Oberkirch (DE)**
• **Rieger, Christian**
  **76476 Bischweier (DE)**
• **Reuschel, Michael**
  **77833 Ottersweier (DE)**

(54) **Verfahren zur Regelung der Anfahrtstrategie von Verbrennungskraftmaschinen**

(57)     Ein Verfahren zur Regelung der Anfahrstrategie von Verbrennungskraftmaschinen, insbesondere Kraftfahrzeugmotoren, mit einem Automatikgetriebe mit mindestens einer ansteuerbaren Drehmomentenübertragungseinheit enthält die Schritte:

- Bestimmen einer einzuhaltenden Anfahr-Soll-Drehzahl der Verbrennungskraftmaschine;
- Ermitteln des Motor-Ist-Moments während des Anfahrens; und

- Korrigieren der Anfahrstrategie durch Aufbringen eines Ziellmoments durch die Drehmomentenübertragungseinheit, wobei das Zielmoment als Funktion von zumindest dem Motor-Ist-Moment und einem Korrekturfaktor festgelegt ist.

EP 1 617 058 A2

**Beschreibung**

Die Erfindung betrifft ein Verfahren zur Regelung der Anfahrstrategie von Verbrennungskraftmaschinen, insbesondere von Kraftfahrzeugmotoren, die mit einem Automatikgetriebe mit mindestens einer ansteuerbaren Drehmomentenübertragungseinheit, vorzugsweise einer Kupplung, verbunden sind.

Bei Anfahrvorgängen von Getriebesystemen mit mindestens einer automatisierten Drehmomentenübertragungseinrichtung besteht oftmals der Wunsch, Drehzahlverläufe der Verbrennungskraftmaschine vorzugeben. Solche Drehzahlverläufe werden in Abhängigkeit von Verbrauchsaspekten bzw. Komfortaspekten bestimmt.

Aus der DE 199 25 664 C2 ist beispielsweise ein Verfahren bekannt, bei dem ein Drehzahlreglersystem eine Motor-Soll-Drehzahl einregelt.

Allerdings besteht oftmals das Problem, dass eine Abweichung des Motor-Ist-Moments von einem aus einem Motorkennfeld bestimmten Motor-Soll-Moment dazu führt, dass die Anfahr-Soll-Drehzahl nicht eingeregelt werden kann.

Es ist eine Aufgabe der Erfindung, ein Verfahren zur Regelung der Anfahrstrategie von Verbrennungskraftmaschinen vorzusehen, mit Hilfe dessen eine Anfahr-Soll-Drehzahl der Verbrennungskraftmaschine explizit vorgegeben und eingehalten werden kann.

Diese Aufgabe wird mit einem Verfahren mit den Merkmalen des Anspruchs 1 gelöst. Bevorzugte Ausführungsformen sind in den abhängigen Ansprüchen angegeben.

Das Verfahren zur Regelung der Anfahrstrategie von Verbrennungskraftmaschinen, insbesondere von Kraftfahrzeugmotoren, mit einem Automatikgetriebe mit mindestens einer ansteuerbaren Drehmomentenübertragungseinheit, enthält die Schritte:

-   Bestimmen einer einzuhaltenden Anfahr-Soll-Drehzahl der Verbrennungskraftmaschine;

-   Ermitteln des Motor-Ist-Moments während des Anfahrens; und

-   Korrigieren der Anfahrstrategie durch Aufbringen eines Zielmoments durch die Drehmomentenübertragungseinheit, wobei das Zielmoment als Funktion von zumindest dem Motor-Ist-Moment und einem Korrekturfaktor festgelegt ist.

Tritt eine Abweichung des Motor-Ist-Moments von einem aus beispielsweise einem Kennfeld im Voraus bestimmten Motormoment auf, kann diese Abweichung durch die Abhängigkeit des Zielmoments der Drehmomentenübertragungseinheit, d.h. des Moments, mit dem die Drehmomentenübertragungseinheit belastet wird, vom Motor-Ist-Moment korrigiert werden. Das Zielmoment ist z.B. ein Kupplungsmoment. Gegebenenfalls wird zusätzlich das Zielmoment oder das erfasste Motormoment gefiltert, um Schwingungen in der Regelung zu vermeiden. Durch die individuelle Anpassung des Korrekturfaktors kann der Verlauf des Anfahrmoments bestimmt werden.

Bevorzugter Weise wird die einzuhaltende Anfahr-Soll-Drehzahl aus einem vom Fahrpedalwinkel abhängigen Motorkennfeld bestimmt, wobei das Zielmoment zusätzlich eine Funktion des Verhältnisses von Motor-Ist-Drehzahl zu Motor-Soll-Drehzahl ist. Dies hat den Vorteil, eine Zieldrehzahl einstellen zu können, die lediglich vom Fahrerwunsch, repräsentiert durch die Fahrpedalneigung, abhängt.

Nach einer alternativen bevorzugten Ausführungsform ist die einzuhaltende Anfahr-Soll-Drehzahl aus einem von der Motor-Ist-Drehzahl abhängigen Motorkennfeld bestimmt. Dies ermöglicht, dass das Kupplungsmoment in erster Linie von der Motor-Ist-Drehzahl abhängt.

Vorzugsweise wird das Verfahren für die Regelung der Anfahrstrategie eines Kraftfahrzeugmotors angewandt, wobei die Drehmomentenübertragungseinrichtung eine Kupplung ist und das Zielmoment ein Kupplungszielmoment ist.

Nach einer weiter bevorzugten Ausführungsform wird das Kupplungsmoment während der Anfahrt nach der Formel berechnet:

$$TrqClTgt = TrqEngNew \cdot \frac{\max(nEng - nLL, 0)}{nEng, Soll - nLL} \cdot TupFactor \quad ,$$

 wobei
TrqClTgt das Kupplungs-Ziel-Moment,
TrqEngNew das Motor-Ist-Moment,
nEng die Motor-Ist-Drehzahl,
nLL die Motor Leerlaufdrehzahl,
nEng,Soll die Anfahr-Soll-Drehzahl des Motors und

TupFactor der Korrekturfaktor ist.

Die Bestimmung des Kupplungs-Ziel-Moments nach dieser Formel ermöglicht eine genaue Einhaltung der Anfahrdrehzahl, die frei gewählt werden kann.

Vorzugsweise ist der Korrekturfaktor eine Funktion des Verhältnisses von Motor-Ist-Moment zum Motor-Soll-Moment. Beispielsweise kann der Faktor linear mit steigendem Verhältnis von Motor-Ist-Moment zum Motor-Soll-Moment ansteigend verlaufen, solange die Motor-Ist-Drehzahl nicht die Motor-Soll-Drehzahl überschreitet. Danach wird die Steigung des Korrekturfaktors, der im Verlauf zwischen Null und eines Verhältnis von Motor-Ist-Moment zum Motor-Soll-Moment von Eins bevorzugt linear ebenfalls zwischen Null und Eins ansteigt, derart steiler, dass er stärker ansteigt als das Verhältnis von Motor-Ist-Moment zu Motor-Soll-Moment. Somit kann ein Überdrehen des Motors ("Wegdrehen") verhindert werden.

Nach einem weiteren vorteilhaften Ausgestaltungsbeispiel kann zusätzlich ein Offset eingebracht werden.

Hierfür gilt:

$$ TrqClTgt = TrqEngNew \cdot \frac{\max(nEng + nOff - nLL, 0)}{nEng, Soll + nOff - nLL} \cdot TupFactor $$

wobei nOff günstigerweise zwischen O und nLL liegen kann.

Eine geeignete Wahl dieses Offsets bewirkt, dass der Momentenaufbau früher und weicher beginnt als ohne. Durch den früheren Aufbau des Kupplungsmoments wird der Einkuppelvorgang weicher gestaltet und der Fahrkomfort erhöht. Die Gefahr eines Motordrehzahlüberschwingers kann weiter gemindert werden.

Nach einer bevorzugten Ausführungsform wird zum Festlegen der Anfahr-Soll-Drehzahl zusätzlich eine Motorbeschleunigung berücksichtigt. Dies kann beispielsweise dadurch geschehen, dass aus einem Motorkennfeld eine Plateaudrehzahl der Verbrennungskraftmaschine ermittelt wird und dieser ein Drehzahlgradient zuaddiert wird, so dass die Anfahr-Soll-Drehzahl die Plateaudrehzahl erhöht durch den Drehzahlgradienten ist. Ist der Drehzahlgradient Null, entspricht die Anfahr-Soll-Drehzahl der aus dem Motorkennfeld ermittelten Plateaudrehzahl.

Vorzugsweise ist der Drehzahlgradient, der der Plateaudrehzahl zugefügt wird, nur dann ungleich Null, wenn zwischen der Plateaudrehzahl und der Anfahr-Soll-Drehzahl die Momentenkennlinie des Motorkennfelds, aus der die Plateaudrehzahl bestimmt wird, eine Steigung ≥ Null aufweist. Die Kennlinie ist bevorzugt eine Kennlinie, die einem konstanten Drosselklappenwinkel bzw. einem konstanten Fahrpedalwinkel entspricht.

Für Fälle, in denen eine fallende Momentenlinie zwischen Plateaudrehzahl und Anfahr-Soll-Drehzahl im Motorkennfeld vorhanden ist, wird, statt den Drehzahlgradienten gleich Null zu setzen, vorzugsweise ein Motoreingriff derart vorgenommen, dass das Motormoment zumindest konstant bleibt. Insbesondere kann beispielsweise mittel des so genannten E-Gases über der Drehzahlsteigerung die Drosselklappe weiter geöffnet werden, um somit ein über der Drehzahl konstantes oder steigendes Motormoment zu erzielen. Es wird dadurch auf eine Motorkennlinie mit höherem Drosselklappenwinkel gewechselt.

Bevorzugter Weise wird dabei das Motormoment zumindest um das Beschleunigungsmoment gesteigert.

Nachfolgend wird die Erfindung beispielhaft anhand der beigefügten Figuren beschrieben, in denen:

Fig. 1 ein gaspedalabhängiges Kennfeld zur Bestimmung der Zielanfahrdrehzahl zeigt;

Fig. 2 die Problematik der Abweichung eines Motor-Ist-Moments von dem aus dem Kennfeld bestimmten Motormoment zeigt;

Fig. 3 ein Beispiel für einen Verlauf des Korrekturfaktors zeigt;

Fig. 4 einen Anfahrvorgang mit einer Anfahrregelung mit der erfindungsgemäßen Strategie zeigt;

Fig. 5 ein Diagramm zur Erläuterung eines Anfahr-Soll-Drehzahl-Verlaufs ist; und

Fig. 6 ein Beispiel für ein Motorkennfeld eines Saugmotors zur Erläuterung der Anhebung der Motordrehzahl während des Anfahrvorgangs ist.

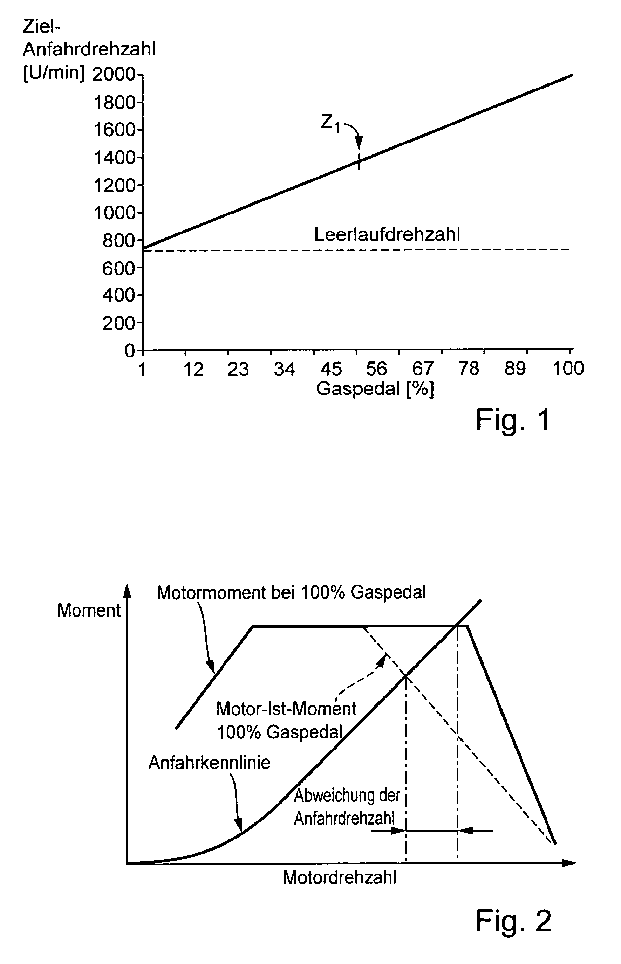

Soll für ein Automatikgetriebe eines Kraftfahrzeugs eine grundsätzlich frei einstellbare Anfahrdrehzahl vorgegeben und eingehalten werden, so wird gemäß einer bevorzugten Ausführungsform des erfindungsgemäßen Verfahrens zunächst die Anfahr-Soll-Drehzahl nEng,Soll explizit vorgegeben. Dazu wird die Anfahr-Soll-Drehzahl des Motors z.B. aus der Kennlinie bestimmt, die in Figur 1 dargestellt ist. In Abhängigkeit von dem Gaspedalwinkel, den der Fahrer wählt, wird die gewünschte Anfahr-Soll-Drehzahl (Zielanfahrdrehzahl) bestimmt. Beispielsweise entspricht einem Gaspedalwinkel aus der Ruhestellung von 50 % des maximal möglichen Gaspedalwinkels eine Zielanfahrdrehzahl von knapp 1400 U/min (Z1 in Figur 1).

Durch die Abhängigkeit der Anfahr-Soll-Drehzahl vom Gaspedalwinkel kann die Zielanfahrdrehzahl nur abhängig vom Fahrerwunsch eingestellt werden. Statt des gaspedalabhängigen Motorkennfelds ist es auch möglich, die Anfahr-Soll-Drehzahl vom Motor-Ist-Moment abhängig zu machen.

Wenn die Anfahr-Soll-Drehzahl bestimmt ist, kann es bei einer herkömmlichen Anfahrstrategie, die keine Korrektur vorsieht, zu einer Abweichung der Anfahrdrehzahl von der Anfahr-Soll-Drehzahl kommen, wenn das Motor-Ist-Moment bei einem bestimmten Gaspedalwinkel (dargestellt ist in Figur 2 z.B. 100% Gaspedal) vom Motor-Soll-Moment abweicht. In diesem Fall kann die durch die Anfahrkennlinie bestimmte Anfahrdrehzahl nicht eingehalten werden.

Daher wird auf die Kupplung als ansteuerbare Drehmomentenübertragungseinheit der Verbrennungskraftmaschine ein bestimmtes Zielkupplungsmoment TrqClTgt aufgebracht. Das Zielkupplungsmoment hängt einerseits vom augenblicklichen Motormoment, d.h. dem Motor-Ist-Moment TrqEngNew, und andererseits von einem Verhältnis zwischen Motor-Ist-Drehzahl nEng und Motor-Soll-Drehzahl nEng,Soll ab. Der zusätzlich verwendete Korrekturfaktor TupFactor dient dazu, beliebige Verläufe des Anfahrmoments vorzugeben und individuell anzupassen. Beispielsweise wird das Kupplungsmoment, das von der Kupplung übertragen wird, während des Anfahrens nach folgender Formel bestimmt:

$$TrqClTgt = TrqEngNew \cdot \frac{\max(nEng - nLL, 0)}{nEng, Soll - nLL} \cdot TupFactor$$

Damit kann durch Steuerung des Kupplungsmoments die vorbestimmte Anfahr-Soll-Drehzahl eingehalten werden und somit die Anfahr-Soll-Drehzahl explizit vorgegeben werden.

Bestimmt man abweichend von der dargestellten Ausführungsform die Anfahr-Soll-Drehzahl nEng,Soll in Abhängigkeit vom Motor-Ist-Moment TrqEngNew, so hat dies den Vorteil, dass das Kupplungsmoment in erster Näherung von der Motor-Ist-Drehzahl abhängt, da sich Nenner und Zähler der Gleichung in gleichem Maße verändern. Allerdings kann in diesem Fall keine direkte Verbindung zwischen Gaspedalwinkel und Anfahr-Soll-Drehzahl, die oftmals vom Fahrer gewünscht ist, eingehalten werden.

Anstatt das Motor-Ist-Moment direkt, ungefiltert in die oben stehende Gleichung einzubringen, ist es möglich, um Schwingungen im Motormoment nicht auf das Kupplungszielmoment zu übertragen bzw. die Regelung durch Schwingungen zu destabilisieren, das Motormoment zu filtern. Dabei kommen herkömmliche mathematische Filterverfahren in Betracht.

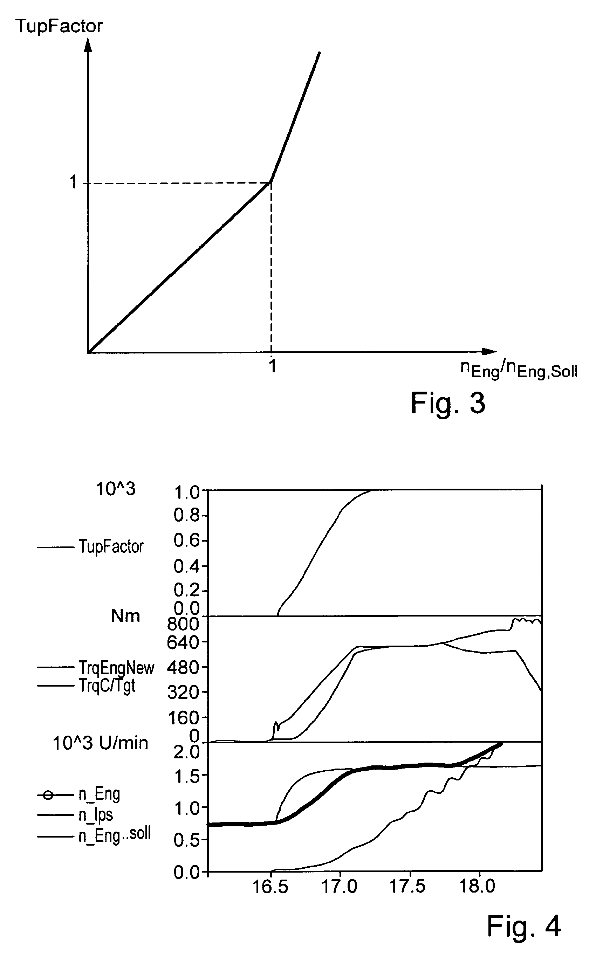

Ein Beispiel für den Verlauf des Korrekturfaktors TupFactor, der vom Verhältnis von Motor-Ist-Drehzahl zur Motor-Soll-Drehzahl abhängt, ist in Figur 3 angegeben.

Bringt man das entsprechende Kupplungsmoment auf die Kupplung eines Kraftfahrzeugs auf, so kann bei einem Korrekturfaktorverlauf, der im obersten Teil von Figur 4 dargestellt ist, die Anfahr-Soll-Drehzahl des Motors rasch erreicht und konstant gehalten werden, wie aus dem untersten Diagramm von Figur 4 zu entnehmen ist. In Figur 4 ist auf der Abszisse die während des Anfahrvorgangs ablaufende Zeit aufgetragen.

Soll zusätzlich zur expliziten Vorgabe der Anfahr-Soll-Drehzahl und deren Einstellung auch ein bestimmter Drehzahlverlauf während des Anfahrens eingehalten werden, so wird es bevorzugt, dass in die Anfahr-Soll-Drehzahl zusätzlich ein Drehzahlgradient eingeht.

Ein solcher mit Hilfe eines Drehzahlgradienten optimierter Verlauf der Anfahrdrehzahl kann einen Kompromiss dafür bieten, dass einerseits vor dem Verschleifen die Drehzahl auf einem Drehzahlplateau verharren soll, damit keine Energie für die Beschleunigung der Motordrehmasse notwendig ist und die gesamte Energie zur Beschleunigung des Triebsstrangs aufgewendet werden kann und andererseits ein Drehzahlplateau vermieden werden soll wofür akustische Gründe sprechen. Außerdem dient die Vermeidung eines Drehzahlplateaus der Minimierung der Reibenergie. Bevorzugt wird somit ab einer ersten Anfahrdrehzahl (Zwischendrehzahl) ein Drehzahlgradient vorgegeben, bis eine Synchrondrehzahl erreicht ist, so dass während der Anfahrt eine kontinuierliche Erhöhung der Motordrehzahl stattfindet.

Wenn man davon ausgeht, dass ein vorhandenes Motormoment einerseits zum Beschleunigen des Motors verwendet werden kann und/oder an die Kupplung weitergeleitet werden kann;

$$MMot = J * \dot{\omega} + MKupp,$$

ergibt sich die aktuelle Soll-Drehzahl während des Anfahrvorgangs aus der Formel:

$$n_{EngTgt} = n_{EngPlateau} + \frac{(n_{EngSynchron} - n_{EngPlateau})}{n_{Eng}} * dn_{InpShaft} * \frac{1}{dt}.$$

Die beispielsweise nach einem der vorher beschriebenen Verfahren ermittelte Anfahr-Soll-Drehzahl wird als Plateaudrehzahl nEngPlateau festgelegt, der ein Drehzahlgradient zugefügt wird. Der Drehzahlgradient wird beispielsweise dadurch bestimmt, dass die Zeitdauer ermittelt wird, bis Motordrehzahl und Getriebeeingangsdrehzahl synchron sind. Diese Zeit wird wie folgt bestimmt:

$$t = \frac{n_{Eng}}{\dot{n}_{InpShaft}} - a$$

$$\Delta n \frac{1}{Interrupt} = \frac{g - e}{t} * \frac{1s}{100 Interrupte}$$

$$\Delta n \frac{1}{Interrupt} = \frac{n_{Ziel} - n_{Start}}{n_{Eng}} * \dot{n}_{InpShaft} * * \frac{1s}{100 Interrupte},$$

wobei nInpShaft die Beschleunigung der Getriebeeingangswelle ist, die gemessen oder berechnet werden kann.

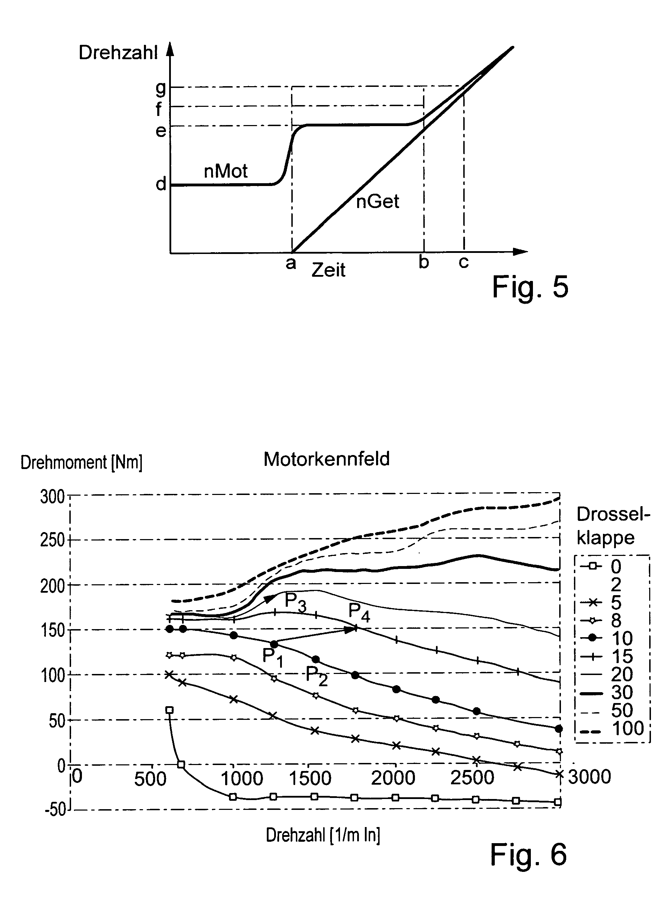

Ein Drehzahlverlauf über der Zeit ist in Figur 5 dargestellt, wobei mit nGet die Getriebedrehzahl und mit nMot die Motordrehzahl bezeichnet ist. Die Synchrondrehzahl, d.h. gleiche Getriebe- und Motordrehzahl, ist bei der Drehzahl g zum Zeitpunkt c erreicht. Die durch die vorher beschriebene Anfahrstrategie vorgegebene Anfahr-Soll-Drehzahl entspricht der Drehzahl e. Der gewöhnliche Drehzahlverlauf mit Plateaudrehzahl des Motors ist mit durchgezogenen Linien dargestellt, während der korrigierte Drehzahlverlauf der gestrichelten Linie entspricht. In Figur 5 ist ein linearer Soll-Drehzahl-Verlauf zwischen der Plateaudrehzahl und der Synchrondrehzahl dargestellt. Grundsätzlich sind jedoch auch beliebige andere mathematisch beschreibbare Verläufe oder durch Kennlinien ablegbare Verläufe möglich.

Durch diese Berechnung der Anfahr-Soll-Drehzahl unter Einbeziehung der Differenz zwischen Synchrondrehzahl und Plateaudrehzahl kann ein Drehzahlplateau im Anfahrvorgang verhindert werden. Wird ein Plateau gewünscht, so wird die Anfahr-Soll-Drehzahl wie vorher beschrieben mit der Plateau-Soll-Drehzahl gleichgesetzt, d.h. der Drehzahlgradient (zweiter Teil der Gleichung) wird zu Null gesetzt.

Gibt man jedoch einen Drehzahlgradienten ( $\frac{n_{EngSynchron} - n_{EngPlateau}}{n_{Eng}} * dn_{InpShaft} * \frac{1}{dt}$ ) vor, wird die Korrektur der Anfahrkennlinie vorzugsweise unter Berücksichtigung des Motorkennfelds der Antriebsmaschine vorgenommen. Insbesondere gibt es in einem Kennfeld, das beispielhaft in Figur 6 dargestellt ist, Bereiche für nahezu alle Drosselklappenwinkel, in denen das Drehmoment mit steigender Drehzahl fällt (siehe beispielsweise Figur 6, 10 % Drosselklappe: der gesamte Bereich). Das bedeutet, dass ein Drehzahlanstieg bei konstanter Drosselklappe eine Verringerung des Motormoments bedeutet, was nicht sinnvoll ist. Andererseits gibt es Bereiche, in denen eine Erhöhung der Drehzahl während des Anfahrvorgangs sinnvoll ist, da in diesen Bereichen der Drehzahlanstieg mit einem Anwachsen des Motormoments verbunden ist.

Möchte man z.B. in dem in Figur 6 dargestellten Motorkennfeld bei einer Zieldrehzahl von 1250 rpm bei 10 % Drosselklappe anfahren (P1), so erkennt man aus dem Motorkennfeld, dass die zugehörige Momentenkennlinie über der Drehzahl bei gleichbleibendem Drosselklappenwinkel fallend ist. Erhöht man die Drehzahl von P1 nach P2 bei gleich bleibendem Drosselklappenwinkel, so geht damit eine Drehmomentenreduktion von etwa 130 Nm auf 110 Nm einher.

Bei einem Drosselklappenwinkel von 20 % stellt sich am entsprechenden Punkt P3 bei einer Drehzahl von 1250 rpm die Situation anders dar, da hier das Motordrehmoment ansteigend ist. Insofern ist in diesem Fall die Erhöhung der Drehzahl vom Soll-Drehzahl-Plateau-Punkt bei 1200 rpm bis ungefähr 1500 rpm sinnvoll, da ein Motormomentanstieg damit verbunden ist.

Ob die Anfahrstrategie durch Erhöhung der Plateaudrehzahl um einen Drehzahlgradienten korrigiert wird, wird bevorzugt in Abhängigkeit davon entschieden, ob im Motorkennfeld damit eine Motormomentenerhöhung verbunden ist. Ist dies nicht der Fall, so wird der Drehzahlgradient wahlweise auf Null gesetzt oder es wird gleichzeitig eine Drosselklappensteigerung vorgenommen. Für den Punkt P1 im Motorkennfeld gemäß Figur 6 bedeutet dies, dass die Anfahrstrategie feststellt, dass die Drehzahlerhöhung um den Drehzahlgradienten mit einem Abfallen des Motormoments verbunden wäre (auf P2). Daher wird in einem ersten Schritt der Drehzahlgradient auf Null gesetzt, wodurch zumindest ein Plateau erzielt wird und das Motormoment konstant gehalten wird. Bevorzugt wird jedoch in einem zweiten Schritt der Drehzahlgradient berücksichtigt, was zu einer Drehzahlerhöhung führt (Pfeil in Figur 6, von 1250 rpm auf 1750 rpm), wobei gleichzeitig die Drosselklappe weiter geöffnet wird, so dass von einer einem bestimmten Drosselklappenwinkel zugeordneten Kennlinie auf eine andere Kennlinie gewechselt wird. Für die in Figur 6 gezeigte Strategie bedeutet dies, dass ausgehend von P1 bei einer Drehzahl von 1250 rpm und einer Drosselklappenöffnung von 10 % die Drehzahl auf 1750 rpm gesteigert wird und gleichzeitig die Drosselklappenöffnung auf 15 % gesteigert wird. Somit steigt die Drehzahl zwischen $P_1$ und $P_4$ an, wobei das Motormoment ebenfalls leicht ansteigt bzw. zumindest gleich bleibt.

**Patentansprüche**

1. Verfahren zum Steuern einer ansteuerbaren Drehmomentenübertragungseinheit von im Antriebsstrang enthaltenen Antriebsmaschinen, insbesondere Kraftfahrzeugmotoren, mit einem Automatikgetriebe, das Verfahren enthaltend die Schritte:

   (a) Festlegen einer einzuhaltenden Anfahr-Soll-Drehzahl der Verbrennungskraftmaschine;
   (b) Während des Anfahrens: Ermitteln des Motor-Ist-Moment der Antriebsmaschine; und
   (c) Erstellen des Ziel-Moments der Drehmomentenübertragungseinheit, wobei das Ziel-Moment als Funktion von zumindest dem Motor-Ist-Moment festgelegt ist.

2. Verfahren nach Anspruch 1, **dadurch gekennzeichnet, dass** die einzuhaltende Anfahr-Soll-Drehzahl aus einer vom Gaspedalwinkel abhängigen Motorkennlinie bestimmt wird und das Ziel-Moment zusätzlich Funktion des Verhältnisses von Motor-Ist-Drehzahl zu Motor-Soll-Drehzahl ist.

3. Verfahren nach Anspruch 1, **dadurch gekennzeichnet, dass** die einzuhaltende Anfahr-Soll-Drehzahl aus einer von der Motor-Ist-Drehzahl abhängigen Motorkennlinie bestimmt wird.

4. Verfahren nach einem der vorhergehenden Ansprüche, **dadurch gekennzeichnet, dass** die Drehmomentenübertragungseinrichtung eine Kupplung ist und das Ziel-Moment ein Kupplungs-Ziel-Moment ist.

5. Verfahren nach Anspruch 4, **dadurch gekennzeichnet, dass** das Kupplungsmoment während der Anfahrt nach folgender Formel berechnet wird:

$$TrqClTgt = TrqEngNew \cdot \frac{\max(nEng - nLL, 0)}{nEng, Soll - nLL} \cdot TupFactor \, ,$$

   wobei
   *TrqClTgt* das Kupplungs-Ziel-Moment,
   *TrqEngNew* das Motor-Ist-Moment,
   *nEng* die Motor-Ist-Drehzahl,
    *nLL* die Motor Leerlaufdrehzahl,
   *nEng,Soll* die Anfahr-Soll-Drehzahl des Motors und
   *TupFactor* der Korrekturfaktor ist.

6. Verfahren nach Anspruch 5, **dadurch gekennzeichnet, dass** der Korrekturfaktor eine Funktion des Verhältnisses von Motor-Ist-Drehzahl zu Motor-Soll-Drehzahl (*nEng/nEng, Soll*) ist.

**7.** Verfahren nach Anspruch 6, wobei der Wert des Korrekturfaktors mit zunehmendem Wert des Verhältnisses der augenblicklichen Drehzahl der Antriebsmaschine zur Solldrehzahl zunimmt und die Zunahme stärker wird, sobald das Verhältnis gleich 1 ist.

**8.** Verfahren nach einem der vorhergehenden Ansprüche, **dadurch gekennzeichnet, dass** zum Festlegen der Anfahr-Soll-Drehzahl zusätzlich eine Motorbeschleunigung berücksichtigt wird.

**9.** Verfahren nach Anspruch 8, **dadurch gekennzeichnet, dass** die Anfahr-Soll-Drehzahl durch eine aus einem Motorkennfeld ermittelte Plateaudrehzahl der Verbrennungskraftmaschine und einen Drehzahlgradienten bestimmt wird, wobei die Anfahr-Soll-Drehzahl die Plateaudrehzahl erhöht durch den Drehzahlgradienten ist.

**10.** Verfahren nach Anspruch 9, **dadurch gekennzeichnet, dass** der Drehzahlgradient nur dann ungleich Null ist, wenn zwischen der Plateaudrehzahl und der Anfahr-Soll-Drehzahl die Momentenkennlinie des Motorkennfelds, insbesondere eine Kennlinie, die einem konstanten Drosselklappenwinkel entspricht, eine Steigung $\geq 0$ aufweist.

**11.** Verfahren nach Anspruch 9, **dadurch gekennzeichnet, dass** für eine zwischen Plateaudrehzahl und Anfahr-Soll-Drehzahl fallende Momentenkennlinie des Motorkennfelds, insbesondere eine Kennlinie, die einem konstanten Drosselklappenwinkel entspricht, ein Motoreingriff derart vorgenommen wird, dass das Motormoment zumindest konstant bleibt.

**12.** Verfahren nach Anspruch 11, **dadurch gekennzeichnet, dass** das Motormoment zumindest um das Beschleunigungsmoment gesteigert wird.

Ziel-
Anfahrdrehzahl
[U/min]

Fig. 1

Fig. 2

TupFactor

1 ---------- 

$n_{Eng}/n_{Eng,Soll}$

1

## Fig. 3

10^3

—— TupFactor

1.0
0.8
0.6
0.4
0.2
0.0

Nm

800
640
480
320
160
0

—— TrqEngNew
—— TrqC/Tgt

10^3 U/min

2.0
1.5
1.0
0.5
0.0

—o— n_Eng
—— n_lps
—— n_Eng..soll

16.5    17.0    17.5    18.0

## Fig. 4

Fig. 5

Fig. 6